Europäisches Patentamt

European Patent Office

Office européen des brevets

(11) Numéro de publication: **0 280 611**
**A1**

## (12) DEMANDE DE BREVET EUROPEEN

(21) Numéro de dépôt: **88400329.4**

(22) Date de dépôt: **15.02.88**

(51) Int. Cl.⁴: **B 01 D 19/00**
B 01 D 36/00, B 65 D 90/34

(30) Priorité: **17.02.87 FR 8701990**

(43) Date de publication de la demande:
**31.08.88 Bulletin 88/35**

(84) Etats contractants désignés:
**AT BE CH DE ES FR GB GR IT LI LU NL SE**

(71) Demandeur: **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07 (FR)**

(72) Inventeur: **Rio, Michel**
**29, rue Sainte Anne**
**F-56640 Arzon (FR)**

**Iltis, Claude**
**6, allée Louis Blanc**
**F-95320 Saint-Leu-La-Foret (FR)**

**Louis, Hervé**
**1, rue Colette**
**F-71100 Chalon-Sur-Saone (FR)**

**Buffet, Georges**
**41, rue Alfred Jarreau**
**F-71380 Saint Marcel (FR)**

**Joly, Marcel**
**25, rue des Géraniums**
**F-71880 Chatenoy-Le-Royal (FR)**

**Goudard, Jean-François**
**3, rue Sarrah Bernhardt**
**F-71110 Chalon-sur-Saone (FR)**

**Bacherot, Joel**
**30, rue de Jambles - Poncey**
**F-71640 Givry (FR)**

**Ducret, Claude**
**Centre Impro.**
**F-71390 Buxy (FR)**

(74) Mandataire: **Jacobson, Claude et al**
**L'AIR LIQUIDE, SOCIETE ANONYME POUR L'ETUDE ET L'EXPLOITATION DES PROCEDES GEORGES CLAUDE**
**75, quai d'Orsay**
**F-75321 Paris Cédex 07 (FR)**

(54) Elément filtrant pour dispositif d'évent et dispositif comportant un tel élément.

㉗ La présente invention concerne un élément filtrant pour dispositif d'évent de conteneur de liquide, ainsi qu'un dispositif d'évent comportant un tel élément filtrant.

L'élément filtrant (20) est caractérisé en ce qu'il comport au moins deux éléments extérieurs rigides perméables aux gaz et aux liquides et présentant des surfaces d'appui parallèles en regard, et un élément intermédiaire (14) perméable aux gaz, non-perméable audit liquide est destiné à être maintenu en position statique entre les surfaces d'appui desdits éléments rigides.

FIG.1

EP 0 280 611 A1

**0 280 611**

## Description

"ELEMENT FILTRANT POUR DISPOSITIF D'EVENT ET DISPOSITIF COMPORTANT UN TEL ELEMENT"

La présente invention concerne un élément filtrant pour dispositif d'évent de conteneur de liquide, ainsi qu'un dispositif d'évent comportant un tel élément filtrant.

Certaines matières dangereuses ne peuvent pas être emballées dans des récipients hermétiquement fermés en raison de leur propriété de se décomposer lentement avec émission d'un gaz susceptible de créer avec le temps une surpression dangereuse dans le récipient.

Parmi ces matières dangereuses, il existe notamment des matières liquides qui émettent en permanence de petites quantités de gaz ; c'est le cas par exemple des solutions aqueuses de peroxyde d'hydrogène $H_2O_2$ ou de peroxydes minéraux tels les solutions aqueuses d'acide monoperoxysulfurique ou bien des peroxydes organiques liquides. Tous ces peroxydes émettent en permanence des petites quantités d'oxygène sous la forme gazeuse.

Pour éviter des surpressions dangereuses dans les emballages de tels produits, ces emballages doivent être munis de dispositifs de fermeture suffisamment perméables aux gaz et étanches aux liquides. Il s'agit de dispositifs d'évent.

Cette disposition, qui est stipulée dans les réglements de transport, est difficile à réaliser dans le pratique.

Ainsi par exemple, lorsque l'emballage rempli à 90-95% de liquide est en position normale, le dispositif d'évent en contact avec le gaz évacue le gaz dégagé et maintient ainsi l'emballage sans pression. Lorsque l'emballage est en position inversée du fait d'un accident ou d'une erreur lors du stockage, par exemple, le liquide est en contact avec le dispositif d'évent qui devrait rester temporairement étanche au liquide et éviter son écoulement au dehors de l'emballage ; mais si l'emballage reste longtemps en position inversée, le gaz émis par le liquide met le récipient en pression et le liquide finit par s'écouler lentement par le dispositif d'évent.

En ce qui concerne les petits emballages, tels que des jerricans, dont la capacité ne dépasse pas 100 litres, la hauteur du liquide dans le cas le plus défavorable ne dépasse pas 1 mètre. Dans ce cas, le dispositif d'évent est en général réalisé par une pastille de matière frittée insérée dans le bouchon ou bien une soupape en matière plastique ou élastique dont la pression d'ouverture est supérieure à la pression hydrostatique du liquide dans le récipient.

Lorsqu'il s'agit d'emballages pour le transport en vrac, on utilise des citernes ayant des capacités de 20 m$^3$ et même plus.

Ces conteneurs ou citernes sont soit montés sur des wagons, soit montés sur des remorques, soit destinés au transport multimodal (route, fer, bateau). D'une part, en cas d'accident de transport ou de renversement de ces citernes, le dispositif d'évent doit pouvoir être étanche au liquide le plus longtemps possible ou laisser le passage à un débit de liquide le plus faible possible et nul de préférence ; d'autre part, il est souhaitable que ce dispositif d'évent ne donne pratiquement aucune surpression dans le citerne en position normale pour éviter toute projection intempestive de liquide lors des opérations de dépotage. Etant donné que ces citernes sont, pour des raisons de sécurité, parfois dépourvues de tubulure et d'ouverture à la partie inférieure de la citerne, elles sont vidangées par des tuyauteries fixées à la partie supérieure ; cette disposition augmente les risques de projections de liquide par surpression intempestive.

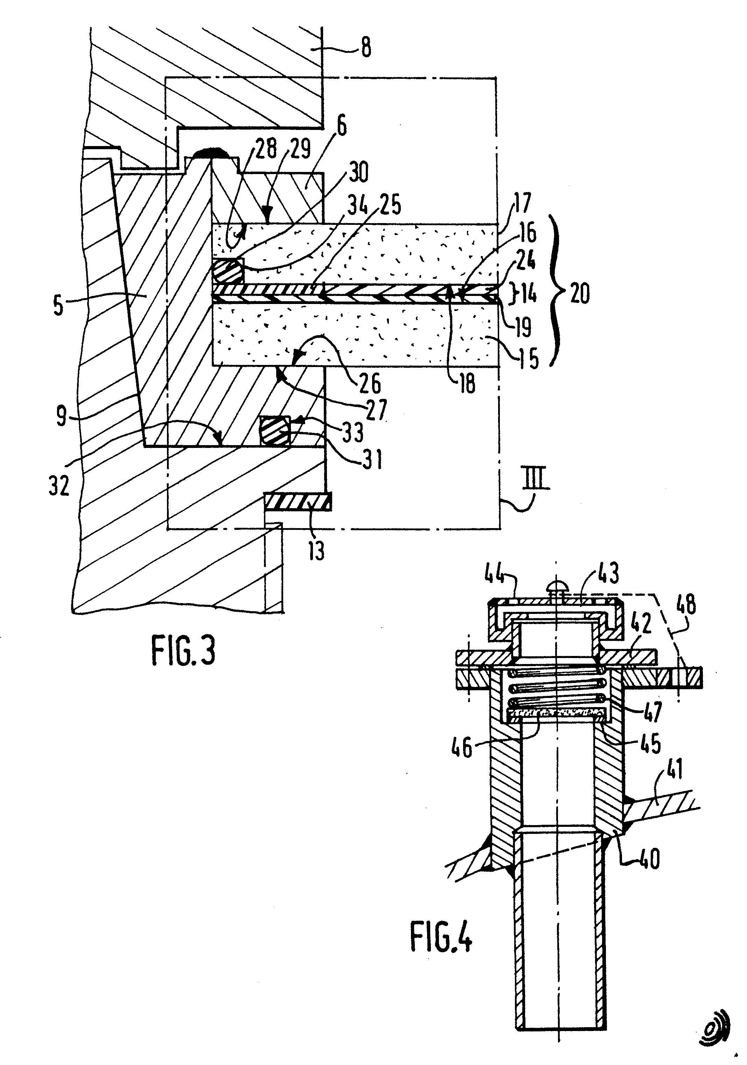

Actuellement, dans le cas particulier du peroxyde d'hydrogène, le dispositif d'évent des citernes transportant par exemple des solutions à 70 % de $H_2O_2$ en poids est constitué uniquement par un disque de 70 mm de diamètre en acier inoxydable fritté de 5 mm d'épaisseur logé dans une tubulure fermée par un bouchon vissé muni de quelques orifices d'évacuation du gaz (ou du liquide éventuellement) qui s'échappent à travers du disque fritté (voir figure 4).

Ce disque fritté a un quadruple rôle :

1. Eviter la chute de corps étrangers dans la citerne, (ces corps étant susceptibles de décomposer $H_2O_2$).

2. Filtrer l'air comprimé éventuellement utilisé pour la mise en pression de la citerne pour la vider (dépotage).

3. Laisser passer le gaz dégagé (l'oxygène gazeux dégagé par la décomposition lente de $H_2O_2$) (fonction évent).

4. En cas de renversement accidentel de la citerne, limiter le plus possible le débit de liquide (solution de $H_2O_2$).

Plus généralement que pour $H_2O_2$, et selon certains règlements de transport nationaux et internationaux, un dispositif d'évent doit être pratiquement étanche au liquide transporté (4.) et cependant suffisamment perméable au gaz pour éviter toute surpression dans la citerne (3.).

Ces deux dernières conditions sont extrêmement difficiles à satisfaire dans la pratique, et le dispositif décrit ci-dessus dans le cas de $H_2O_2$ remplit très imparfaitement ce quatrième rôle.

L'invention concerne un élément filtrant pour dispositif d'évent remplissant les deux dernières conditions et caractérisé en ce qu'il comporte au moins deux éléments extérieurs rigides perméables aux gaz et aux liquides et présentant des surfaces d'appui parallèles en regard, et un élément intermédiaire perméable aux gaz, non-perméable audit liquide et destiné à être maintenu en position statique entre les surfaces d'appui desdits éléments rigides, l'élément intermédiaire comportant au moins un premier filtre perméable au gaz

2

non-perméable au liquide, au contact d'une des surfaces d'appui; un joint périphérique imperméable au liquide constitué d'un matériau fluant sous la pression disposé sur le premier filtre et définissant une surface intérieure; et un second filtre perméable au gaz non perméable au liquid disposé sur le premier filtre en coïncidence avec la surface intérieure dudit joint périphérique, l'épaisseur dudit joint étant au repos supérieure à l'épaisseur du second filtre.

La manière dont l'invention peut être réalisée et les avantages qui en découlent apparaîtront mieux à la lecture de la description détaillée, des exemples de réalisation qui suivent à titre indicatif et non limitatif, et sur les dessins annexés qui représentent :
- à la figure 1, un bouchon d'évent selon une coupe I-I définie à la figure 2;
- à la figure 2, le couvercle du bouchon d'évent selon la coupe II-II définie à la figure 1 ;
- à la figure 3, un détail III de la section selon I-I du bouchon représenté à la figure 1 ;
- et à la figure 4, en coupe, un dispositif d'évent muni d'un bouchon classique connu.

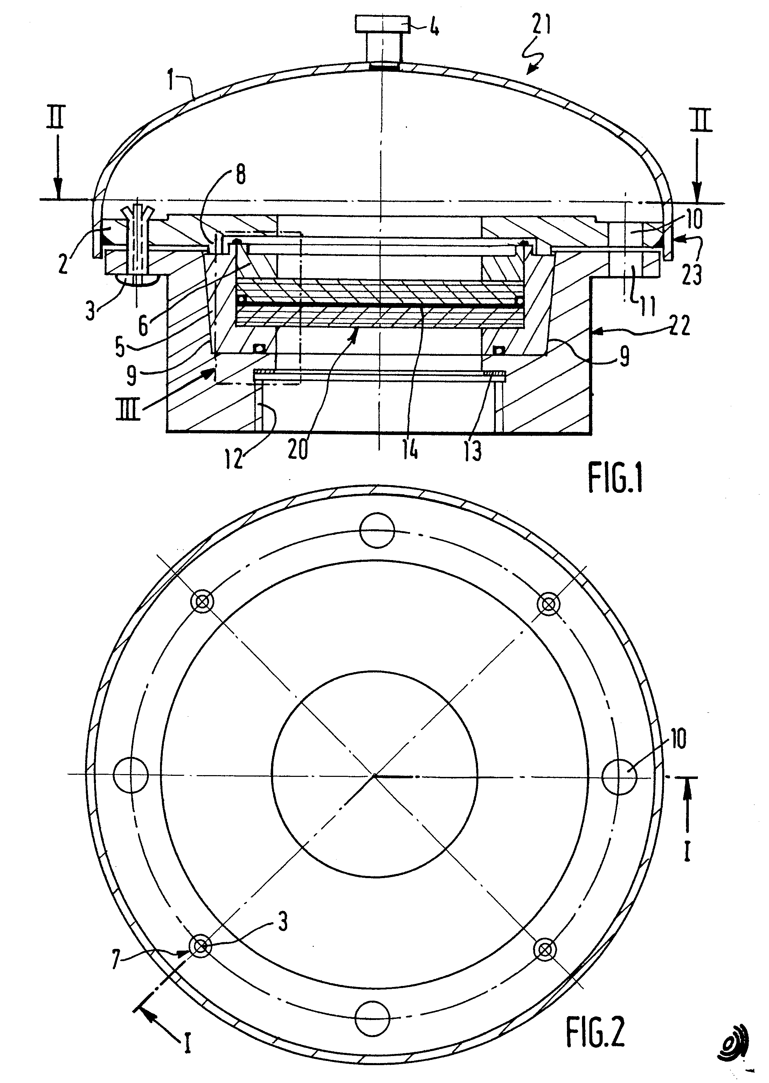

Comme cela apparaît à la figure 1, l'élément filtrant en forme de disque 20 est disposé dans le bouchon d'évent 21, entre l'embase filetée 22 et le couvercle 23.

Dans le dôme 1 est fixée la pièce annulaire 2, l'ensemble du dôme 1 et de la pièce 2 formant le couvercle 23. L'embase 22 et le couvercle 23 forment le bouchon 21. Le couvercle 23 est muni d'un rivet 4 destiné à relier le bouchon à la citerne auy moyen d'une chaînette (non représentée). L'embase 22 et la pièce 2 du couvercle 23 sont reliés au moyen de 4 rivets creux expensibles 3 placés dans les trous cylindriques 7 de la pièce 2 et dans des trous correspondants de l'embase placés en regard. La pièce 2 et l'embase 22 comportent en outre des trous d'évacuation du gas 10 et 11 placés en regard. L'embase 22 comporte un filetage 12 destiné à visser le bouchon 21 sur l'ajutage d'une citerne (non représentés) et un joint d'étanchéíté 13.

L'élément filtrant 20 décrit plus bas est lui-même maintenu entre une douille 5 sensiblement de même diamètre intérieur que l'élément filtrant et un anneau de maintien 6, la douille 5 et l'anneau 6 étant soudés et formant une cartouche qui vient se loger dans le bouchon 21 dans un évidement annulaire 9 de l'embase 22 et est maintenu dans cet évidement 9 par l'épaulement 8 de la pièce annulaire 2.

La figure 3 montre en détail la structure de l'élément filtrant 20 et son montage dans une cartouche entre la couille 5 et l'anneau de maintien 6. L'élément filtrant 20 comporte un premier disque poreux et rigide 15, ayant une surface d'appui 16 sur laquelle est disposé un premier filtre 19 perméable au gaz non-perméable au liquide sensiblement de même surface que le premier disque 15, et sur lequel est disposé un joint plat annulaire 25 sensiblement de même périmètre extérieur que le premier disque 15 et dont la surface intérieure est occupée par un second filtre 24 perméable au gaz non-perméable au liquide, ayant dans le même surface que la surface intérieure du joint plat 25 et coïncidant avec celle-ci, le joint 25 et le second filtre 24 étant au contact de la surface d'appui 18 du second disque poreux rigide 17. Le disque poreux 17 est en outre muni d'une échancrure annulaire 34 en regard du joint plat 25. La surface de base de la douille 5 est minue d'une échancrure annulaire 33 ; des joints toriques 30 et 31 sont disposés dans ces échancrures 33 et 34.

De préférence, les matériaux utilisés pour réaliser l'élément filtrant sont choisis compatibles avec le liquide et le gaz transportés. Dans le cas du peroxyde d'hydrogène, comme éléments extérieurs rigides on peut utiliser tout matériau poreux rigide compatible avec $H_2O_2$ et par exemple des disques en acier inoxydable fritté, en verre fritté ou en plastique fritté. Comme élément intermédiaire perméable au gaz non-perméable au liquide, on utilise de préférence un matériau poreux et pour lequel la tension superficielle entre le liquide et le matériau est négative. Ainsi, le filtre n'est pas mouillé par le liquide, mais, poreux, il reste perméable au gaz. Dans le case du peroxyde de d'hydrogène, on peut ainsi utiliser des filtres en polydifluorure de vinylidène (PVDF) ou en polytétrafluoroéthylène (PTFE). On utilise de préférence les filtres PTFE-PE c'est-à-dire réalisés en PTFE cru disposé sur un résille en polyéthylène (PE) qui donne au filtre sa stabilité dimensionnelle et facilite son maniement lors du montage.

De manière générale, des disques frittés d'une épaisseur d'environ 1 à 5 mm et ayant des diamètres de pores de l'ordre de 1 à 100 μm conviennent. Comme filtre perméable au gaz non- perméable au liquide, conviennent des filtres en PTFE d'épaisseur comprise entre environ 75 et 250 μm, de porosité interne comprise entre environ 50 et 80 %, ou de diamètre de pore inférieur à 10 μm, de préférence 1 μm.

De préférence, le côté résille du filtre est disposé en regard de la surface d'appui de l'élément extérieur rigide.

De préférence, comme il a été décrit plus haut, on utilise un élément intermédiaire complexe comportant deux filtres PTFE-PE et un joint périphérique. Cependant, selon une variante de l'invention, on peut n'utiliser qu'un seul filtre.

Comme joint périphérique, on utilise de préférence un joint périphérique plat en un matériau compressible, par exemple en élastomère ou plastomère capable de fluer sous la pression, et notamment en PTFE fritté. Comme joint d'étanchéité, on peut utiliser des joints toriques en caoutchouc fluoré.

A la figure 2, apparaissent plus clairement les rivets 3 dans les trous 7 et les trous 10 d'évent de la pièce 2 du convercle 23.

Le bouchon 21 lui-même (22, 23, 2) et la cartouche 5, 6 sont réalisés en matériau compatible avec le produit transporté, et dans le cas de $H_2O_2$ par exemple en acier inoxydable.

Le mode de réalisation décrit en détail ci-dessus n'est pas limitatif. En effet, la symétrie des dispositifs n'est pas nécessairement cylindrique et de même, les éléments rigides de l'élément filtrant ne sont pas nécessairement plats. De plus, le nombre de rivets et de trous d'évent 10, 11 n'est pas décisif.

Enfin, bien que seul soit décrit un élément filtrant inserré dans une cartouche soudée, d'autre moyens de maintien des éléments en position statique sont envisageables. On peut envisager d'autres formes de cartouche, par exemple des cartouches ou la douille et l'anneau sont fixés de façon amovible par des vis ou des rivets. On peut également envisager de simplement disposer l'élément filtrant entre l'embase 22 et de maintenir ses différents éléments entre l'embase et la pièce 2 du couvercle 23 fixé ou vissé sur l'embase.

Cependant, la variante comportant une cartouche présente l'avantage de permettre un changement immédiat de la cartouche sans nécessiter le changement du bouchon complet en cas de colmatage de l'élément filtrant. La cartouche, par sa rigidité, assure en outre la stabilité de la compression des éléments filtrant lors des opérations de vissage et dévissage du bouchon.

La façon dont l'élément filtrant selon l'invention remplit son double rôle de perméabilité au gaz et d'imperméabilité au liquide en cas de renversement va être décrit ci-après.

En fonctionnement normal, le gaz dégagé continuellement par le liquide contenu dans le conteneur transverse l'ensemble de l'élément filtrant et se dégage par les moyens d'évent 10,11.

De manière préférentielle, ces moyens d'évent sont protégés par le bouchon lui même, comme cela est le cas dans la variante représentée, afin d'éviter l'introduction directe de poussière, d'impureté ou de pluie dans le bouchon. Cependant, ces moyens d'évent pourraient être prévus à d'autres endroits du bouchon.

Les mouvements du liquide chargé dans la citerne créent au niveau de l'évent une succession de pressions et de dépressions qui sollicitent l'élément filtrant et en particulier l'élément intermédiaire 14. C'est pour éviter la détérioration de l'élément intermédiaire que celui-ci est maintenu en position statique entre les surfaces d'appui 16 et 18 des éléments extérieurs rigides 15 et 17. Les différentes parties de l'élément filtrant sont en outre maintenus en position statique les unes par rapport aus autres par les surfaces périphériques 26 de la douille 5 et 28 de l'anneau de maintien 6, qui enserrent et maintiennent de façon fixe l'élément filtrant 20 par les surfaces annulaire 27 et 29 des disques poreux rigides 15 et 17. L'embase 22 et le couvercle 23 sont reliés par les rivets 3 quand le bouchon 21 est monté ; la cartouche 5, 6 est maintenue dans l'évidement 9 de l'embase 22 par l'épaulement 8 de la pièce 2 du couvercle 21.

Lorsque le conteneur est exceptionnellement en position renversée, le liquide pénètre dans la tubulaire et l'ajutage du dispositif d'évent et parvient au contact de l'élément filtrant. Il peut imprégner et pénétrer dans le premier élément rigide jusqu'à sa surface d'appui 16. Il rencontre alors le filtre 14 non-permable au liquide qui le bloque et empêche le liquide de s'écouler plus ayant dans le bouchon. Afin que le liquide ayant pénétré l'élément 15 ne puisse s'écouler par le jeu entre l'épaulement 9 de l'embase 22 et la douille 5 de la cartouche, la douille 5 est munie d'une échancrure circulaire 33 destinée à recevoir un joint d'étanchéité torique 31 qui assure l'étanchéité entre l'embase 22 par contact du joint d'une part avec la surface annulaire 32 de l'évidement 9 et d'autre part avec les bords de l'échancrure 33.

On a cependant remarqué qu'au cas où le serrage entre la douille 5 et la pièce 6 est trop important, et au cas où un seul filtre permable au gaz non permable au liquide est utilisé, il se peut que celui-ci, du fait de la compression, perde sa porosité au gaz. Pour remédier à cet inconvénient, ill est préférable de prévoir un élément intermédiaire complexe tel qu'il a été décrit plus haut, c'est-à-dire comportant deux filtres et un joint périphérique. Le joint périphérique plat de préférence a une épaisseur au repos légèrement supérieure à l'épaisseur du second filtre qui occupe sa surface intérieure. Ainsi, lors du montage de la douille 5 et de l'anneau de maintien 6, la matière du joint plat 25 flue légèrement d'une part dans les pores de l'élément rigide extérieur 17 et d'autre part dans ceux du premier filtre 19 et ce jusqu'à ce que l'épaisseur totale du premier filtre 19 et du joint plat 25 sous pression soit sensiblement égal à l'épaisseur au repos des deux filtres 19 et 24. Il est préférable de prévoir un tel filtre 24 occupant la surface intérieure du joint périphérique 25 afin d'éviter au premier filtre 19 de se déchirer du fait de la succession de pressions et de dépressions qui le sollicitent, et ainsi de ne lui laisser aucune possibilité de mouvement entre les deux surfaces d'appui 16 et 18 des deux éléments extérieurs rigides.

De plus, pour éviter au liquide qui aurait imprégné en cas d'accident l'élément rigide 15 et serait parvenu jusqu'à sa surface d'appui 16, en particulier à sa périphérie de s'écouler hors du bouchon, il est préférable que le second élément rigide 17 soit pourvu d'une échancrure 34 destinée à recevoir un joint d'étanchéité 30, ce joint 30 réalise l'étanchéité par contact d'une part avec le joint plat 25 et d'autre part, avec la surface cylindrique intérieur de la douille 5 de la cartouche; le liquide ne peut dont en aucun cas et même en cas de renversement traverser l'élément filtrant et s'écouler par le bouchon d'évent.

La présente invention concerne également un dispositif d'évent pour conteneur de liquide comportant une tubulure et un bouchon d'évent, caractérisé en ce que le bouchon comporte au moins un élément filtrant tel que défini ci-dessus; une embase tubulaire comportant une surface périphérique de support dudit élément; un couvercle comportant des moyens de maintien de l'élément; des moyens de liaison de l'embase et du couvercle; et des moyens d'étanchéité au liquide.

Le bouchon de dispositif d'évent muni d'un élément filtrant remplit des deux fonctions essentielles de perméabilité au gaz et d'imperméabilité au liquide contenu. De plus, dans le cas de conteneurs de liquide dangereux qui n'ont en général pas de dispositif de vidange prévu au niveau inférieur du conteneur, il est avantageux que le dispositif d'évent remplisse en outre la fonction de filtre de l'air comprimé que l'on injecte par ce dispositif d'évent afin de vider le conteneur.

Selon une variante de l'invention, le dispositif d'évent peut dont en outre être muni d'un filtre disposé dans la partie de l'évent qui reste sur le conteneur, et notamment d'un filtre disposé dans la tubulure d'évent. Ce filtre empêche d'une part les impuretés contenues dans l'air comprimé ou d'autres objets de pénétrer dans la citerne (rôle (1.) et (2.)) et d'autre part durant les transports empêche le liquide contenu dans la citerne, lors des variations de pression, d'atteindre l'élément filtrant selon l'invention placé dans le bouchon, de le mouiller et d'altérer ses propriétés de perméabilité au gaz. Ce filtre a donc en outre la fonction anti-retour. Un tel filtre est de préférence poreux, en acier inoxydable, en verre fritté ou en plastique fritté. Ces fonctions sont remplies par le filtre-évent monté dans les dispositifs classiques, et qui peut dont demeurer tel quel dans les dispositifs selon l'invention.

De plus, lors des opérations de vidange, il peut être intéressant de protéger l'élément filtrant, décrit ci-dessus de l'eau de pluie ou de lavage qui pourrait l'atteindre et perturber ses propriétés filtrantes. Il peut donc être avantageux selon l'invention de disposer sur l'élément filtrant disposé par exemple dans le bouchon une couche de matériau hydrophobe, et notamment de protéger les filtres et éléments filtrants par un reps en PTFE.

EXEMPLE :

Dans une citerne cylindrique de 21m³ de capacité chargée à 95% à 20°C avec une solution de $H_2O_2$ à 70%, la quantité d'oxygène provenant de la décomposition de $H_2O_2$ est d'environ 10 l/h au maximum. Avec un tel débit d'oxygène, la pression dans la citerne atteindrait 1,5 10⁵ Pa en 6 jours. La pression d'ouverture de la soupape de sécurité de la citerne est généralement de 1,5.10⁵ Pa.

Ces citernes sont équipées de façon classique d'une dispositif d'évent tel que représenté à la figure 4. La tubulure 40 fixée sur la citerne 41 est équipée d'un filtre 46, disque en acier inoxydable fritté disposé sur un joint annulaire 45 et maintenu dans la tubulure 40 par un ressort à boudin 47 lui-même maintenu par l'ajutage 42 sur lequel est vissé le bouchon d'évent 43 pourvu de trous d'évent 44. Lors de la vidange, on dévisse le bouchon 43 vissé sur l'ajutage 42. Une chaînette 48 relie le bouchon dévissé à l'ajutage 42. On connecte sur l'ajutage 42 une arrivée d'aire comprimé à la pression nominale de 10⁵ Pa. Pour vider la citerne en une demi-heure à une heure, il est nécessaire que le débit d'air comprimé traversant le disque fritté sit compris entre environ 40 et 20 m³/h.

Le tableau I ci-après rassemble les résultats de perméabilité à l'air et à $H_2O_2$ 70% de différents matériaux et d'éléments filtrant réalisés selon l'invention.

TABLEAU I

| MATERIAU DIAMETRE DE PORES ($\mu$ m) | DIAMETRE UTILE (mm) | EPAISSEUR (mm) | PERMEABILITE A L'AIR ($m^3/h/10^5Pa$) $*(1/h)$ | PERMEABILITE $H_2 O_2$ 70 % (1/h) |
|---|---|---|---|---|
| inox° fritté 75 | 70 | 5 | 33 | 540 |
| inox fritté 14 | 70 | 2 | 11 | 180 |
| inox fritté 8 | 70 | 2 | 8 | 130 |
| inox fritté 3 | 70 | 2 | 2,5 | 42 |
| PVDF-PE 0,22 | 42 | 0,17 | * 10 sous $20\ 10^2$Pa | 0 |
| PTFE-PE 0,2 | 42 | 0,17 | * 10 sous $2\ 10^2$Pa | 0 |
| inox fritté 75 2xPTFE-PE 0,2 inox fritté 75 | 50 | 5 0,17x2 5 | * 10 sous $6,4\ 10^2$Pa | 0 |
| inox fritté 75 2xPTFE-PE 0,5 inox fritté 75 | 50 | 5 0,17x2 5 | * 10 sous $5\ 10^2$Pa | 0 |
| inox fritté 75 2xPTFE-PE 1 inox fritté 75 | 50 | 5 0,17x2 5 | * 10 sous $3,8\ 10^2$Pa | 0 |

° inox : acier inoxydable

Pour les 6 premiers essais : les essais ont été réalisés sous deux mètres de colonne liquide d'H2O2, c'est-à-dire sous 0,26 10⁵Pa de pression hydraulique.

Pour les 3 derniers essais : un joint plat en PTFE fritté d'une épaisseur de 0,26 mm et de diamètre intérieur 50 mm et disposé sur le premier filtre PTFE-PE et le second filtre PTFE-PE et disposé à l'intérieur du joint plat.

A une pression entre les moyens de maintien de l'élément filtrant suffisante pour assurer le maintien en position statique, la perméabilité à l'$H_2O_2$ 70 % a été mesurée :
- elle est nulle (0ml/h) à une pression de 3,5 $10^5$ Pa dans le cas du 7ème essai,
- dans le cas du 8ème essai, elle est nulle à une pression de 2,5 $10^5$ Pa et elle est de 5,6 ml/h à 3 $10^5$ Pa,
- dans le cas du 9ème essai, elle est nulle à une pression de 1 $10^5$ Pa et elle est de 4 ml/h à une pression de 1,5 $10^5$ Pa.

Les essais ont été menés pendant 1 heure, après que certains d'entre eux aient été poursuivis pendant 144 h sans variation de débit.

Il apparait donc clairement que quelque soit le disque en inoxydable fritté, quand celui-ci est utilisé seul, comme c'est le cas dans les dispositifs d'évent actuellement utilisés, il laisse passer des quantités de liquide inacceptables.

Les résultats ci-dessus montrent qu'un dispositif d'évent selon l'invention remplit les 4 rôles cités ci-dessus. Un choix judicieux des filtres PTFE-PE en particulier permet d'assurer une perméabilité nulle en $H_2O_2$ 70 % à une pression juste supérieure à la pression déclanchant la soupape de sécurité. (ex : soupape à 1,5 $10^5$Pa : choix du PTFE-PE à 0,5 micromètre de diamètre de pore (8ème essai)).

## Revendications

1. Elément filtrant pour dispositif d'évent de conteneur de liquide, caractérisé en ce qu'il comporte au moins deux éléments extérieures rigides (15,17) perméables aux gaz et aux liquides et présentant des surfaces d'appui (16,18) parallèles en regard, et un élément intermédiaire (14) perméable aux gaz, non-perméable audit liquide et destiné à être maintenu en position statique entre les surfaces d'appui desdites éléments rigides, l'élément intermédiaire (14) comportant au moins un premier filtre (19) perméable au gaz non-perméable au liquide, au contact d'une des surfaces d'appui; un joint périphérique (25) imperméable au liquide constitué d'un matériau fluant sous la pression disposé sur le premier filtre et définissant une surface intérieure; et un second filtre (24) perméable au gaz non perméable au liquide disposé sur le premier filtre en coïncidence avec la surface intérieure dudit joint péripherique, l'épaisseur dudit joint étant au repos supérieure à l'épaisseur du second filtre.

2. Elément filtrant selon la revendication 1, caractérisé en ce que les éléments extérieurs (15,17) et intermédiaires (14,19,24,25) sont réalisés en matériaux compatibles avec $H_2O_2$.

3. Elément filtrant selon l'une des revendications 1 et 2, caractérisé en ce que les éléments extérieurs sont en acier inoxydable fritté, en verre fritté ou en plastique fritté.

4. Elément filtrant selon l'une quelconque des revendications 1 à 3, caractérisé en ce qu'au moins le premier filtre (19) est en polytétrafluoréthylène (PTFE) poreux, notamment du PTFE cru de diamètre de pores inférieure à 10 micromètres, disposé sur une résille en polyethylène (PE).

5. Elément filtrant selon la revendication 4, caractérisé en ce que ladite résille est en regard de la surface d'appui de l'élément rigide.

6. Elément filtrant selon l'une quelconque des revendicatrions 1 à 5, caractérisé en ce que le joint péripherique (25) est réalisé en élastomère ou plastomère, notamment en PTFE fritté.

7. Elément filtrant selon l'une quelconque des revendications 1 à 6, caractérisé en ce qu'il comporte des moyens de maintien (5,6) en position statique des éléments (14, 15, 17).

8. Elément filtrant selon l'une quelconque des revendications 1 à 7, caractérisé en ce que l'élément filtrant (20) et/ou les moyens de maintien en position statique (5, 6) sont pourvus d'échancrure annulaire ou périphérique (33, 34) destinée à recevoir un joint d'étanchéité (30,31).

9. Dispositif d'évent pour conteneur de liquide du type comportant une tubulure et un bouchon d'évent, caractérisé en ce que le bouchon (21) comporte au moins un élément filtrant (20) selon l'une quelconque des revendications 1 à 8; une embase (22) tubulaire comportant une surface périphérique (9, 26) de support dudit élément ; un couvercle (23) comportant des moyens (8) de maintien de l'élément (20) ; des moyens de liaison (3, 7) de l'embase et du couvercle ; et des moyens (30, 31) d'étanchéité au liquide.

10. Dispositif d'évent selon la revendication 9, caractérisé en ce que les moyens d'évent (10,11) du bouchon (21) sont protégés par le couvercle (23).

11. Dispositif d'évent, selon la revendication 9 au 10, caractérisé en ce que la tubulure comporte un filtre anti-retour, notamment en acier inoxydable fritté.

12. Dispositif d'évent selon l'une des revendications 9 à 11, caractérisé en ce que l'élément filtrant (20) est protégé par un matériau hydrophobe, notamment par un reps en PTFE.

0280611

FIG.1

FIG.2

FIG.3

FIG.4

Office européen des brevets

# RAPPORT DE RECHERCHE EUROPEENNE

Numero de la demande

EP 88 40 0329

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 081 655 (INTERMEDICAT GmbH) <br> * Résumé * <br> --- | 1 | B 01 D 19/00 <br> B 01 D 36/00 <br> B 65 D 90/34 |
| A | EP-A-0 155 115 (WL GORE & ASSOCIATES) <br> * Résumé; page 3, ligne 19 - page 4, ligne 23; figures * <br> --- | 1,4,5,9 ,10,12 | |
| A | FR-A-2 259 026 (RIEDEL-DE HAEN AG) <br> * Page 2, ligne 30 - page 3, ligne 12; page 8, lignes 4-12; revendications; figure 6 * <br> --- | 1,2-4,7 | |
| A | FR-A-1 138 322 (THOMSON-HOUSTON) <br> * Figures; page 1, alinéa 6 - page 2, alinéa 6 * <br> --- | 1,6 | |
| A | DE-A-2 509 258 (ELBATAINER KUNSTSTOFF- UND VERPACKUNGSGESELLSCHAFT mbH) <br> * Page 5, ligne 5 - page 6, ligne 10; figures * <br> --- | 1-3,7,8 | |
| A | DE-A-2 509 428 (AUDI NSU AUTO UNION) <br> * Page 2, alinéa 2 - page 3, alinéa 1 * <br> --- | 1-3,9, 11 | DOMAINES TECHNIQUES RECHERCHES (Int. Cl.4) <br> B 01 D <br> B 65 D |
| A | GB-A-1 146 972 (POROUS PLASTICS LTD) <br> * Page 1, lignes 24-41; page 3, lignes 3-84; revendications; figure 5 * <br> ----- | 1,2,7 | |

Le présent rapport a été établi pour toutes les revendications

| Lieu de la recherche | Date d'achèvement de la recherche | Examinateur |
|---|---|---|
| LA HAYE | 16-05-1988 | VAN BELLEGHEM W.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P0402)